# EUROPÄISCHE PATENTSCHRIFT

(11) **EP 1 037 028 B1**
(45) Veröffentlichungstag und Bekanntmachung des Hinweises auf die Patenterteilung: **19.11.2008**
(21) Anmeldenummer: 00102362.1
(22) Anmeldetag: 04.02.2000
(51) Int. Cl.: G01K 13/02, G01F 23/24

(54) **Verfahren zur Auswertung der Sensorsignale eines Sensors zur kombinierten Temperatur- und Füllstandserfassung**
A method for evaluating the signals from a sensor for combined measurement of temperature and level
Procédé pour évaluer les signaux d'un capteur mixte de température et de niveau

(30) Priorität: 09.03.1999 DE 19910284
(43) Veröffentlichungstag der Anmeldung: 20.09.2000
(73) Patentinhaber: Continental Automotive GmbH, 30165 Hannover (DE)
(72) Erfinder: Schimmel, Ralf, 35789 Weilmünster (DE); Wallrafen, Werner, 65719 Hofheim (DE); Acht, Joachim, 65936 Frankfurt (DE)

(56) Entgegenhaltungen:
- DE-A- 4 116 355
- GB-A- 2 022 844
- US-A- 5 111 691
- PATENT ABSTRACTS OF JAPAN vol. 009, no. 174 (P-374), 19. Juli 1985 (1985-07-19) -& JP 60 049224 A (TOSHIBA KK), 18. März 1985 (1985-03-18)

## Beschreibung

Die Erfindung betrifft ein Verfahren zur Auswertung der Sensorsignale eines Sensors zur kombinierten Temperatur- und Füllstandserfassung von elektrisch leitfähigen Medien, insbesondere von Kühlflüssigkeit im Kraftfahrzeug, mit einem in einem Gehäuse jeweils an einem Ende angeordneten, in das Meßmedium hineinragenden temperaturempfindlichen Sensorelement und mindestens einer Meßelektrode als Sensorelement zur Füllstandserfassung, die durch eine gegenüber dem Meßmedium abgedichtete Öffnung des Gehäuses hindurch direkt in das Meßmedium eintaucht und an der im Zusammenwirken mit einer Gegenelektrode der spezifische elektrische Widerstand des Meßmediums erfaßt wird, wobei jedes Sensorelement elektrische Anschlußkontakte aufweist, die zu einem Kontaktsockel geführt sind, wo die Sensorsignale abgegriffen werden, wobei jedes Sensorelement elektrische Anschlußkontakte aufweist, die zu einem Kontaktsockel geführt sind, wo die Sensorsignale abgegriffen werden, beide Sensorelemente in einem gemeinsamen Gehäuse mit gemeinsamen Kontaktsockel angeordnet sind, wobei das temperaturempfindliche Sensorelement und das Sensorelement zur Füllstandserfassung mit ihren jeweiligen Anschlußkontakten jeweils als ein vorgefertigtes Modul in dem Gehäuse durch Kraft-, Form- und/oder Stoffschluß fixiert sind.

Grundsätzlich sind Sensoren der gattungsgemäßen Art als getrennt voneinander einzusetzende Sensorelemente zur Temperaturerfassung und zur Füllstandsmessung bekannt. Sie werden für Meß- und Regelaufgaben, insbesondere im Kraftfahrzeug, eingesetzt, wo sie eine Vielzahl von Grundanforderungen, wie beispielsweise hohe Meßgenauigkeit und Langzeitstabilität bei kostengünstiger Bauweise, erfüllen müssen.

Aus DE 77 129 51 U1 ist ein elektrisches Widerstandsthermometer mit einem hülsenförmigen Gehäuse bekannt, in dem ein temperaturabhängiger Meßwiderstand angeordnet ist. Durch zwei im Gehäuse zum Meßwiderstand führende Kontaktleiter ist der Meßwiderstand elektrisch leitend mit dem Kontaktsockel verbunden. Der Meßwiderstand und die Kontaktleiter sind dabei jeweils in einem von mehreren im Gehäuse ausgebildeten Kanälen angeordnet. Die Kontaktleiter können auch als streifenförmige Kontaktschienen ausgebildet sein, wie dies aus DE 42 27 578 A1 bekannt ist. In beiden Fällen weisen die Konstruktionen relativ viele zu montierende Einzelteile auf, so daß hohe Fertigungskosten entstehen.

Auch Sensoren zur Füllstandserfassung der gattungsgemäßen Art sind seit langem bekannt. Sie basieren auf dem Prinzip, daß so bald das elektrisch leitfähige Meßmedium in Berührung mit den Meßelektrode kommt, es einen elektrischen Leitwert zwischen der Meßelektrode und der Gegenelektrode bildet, wobei die Gegenelektrode in der Regel die Masse-Elektrode des Behälters für das Meßmedium darstellt. Eine Auswerteschaltung spricht entweder auf das Fließen des Stroms oder auf durch den Widerstand des Meßmediums verursachten Spannungsabfall an und zeigt dadurch das Erreichen des festzustellenden Füllstands an. Sie sind in der Regel als Grenzwertgeber bzw. Niveauschalter eingesetzt, um den Temperaturmeßwert des Meßmediums zu ergänzen. Beide Meßwerte werden dann in einer Auswerteelektronik in einer Steuereinheit erfasst und gegebenenfalls Anzeigeinstrumenten zugeführt. Der Temperaturmeßwert wird in der Regel durch einen zweiten Sensor, dem Sensor mit temperaturempfindlichen Sensorelement, geliefert, der in Abstimmung zum Sensor zur Füllstandserfassung in dem Meßmedium angeordnet ist. Beide Sensoren benötigen für ihre Montage viele Einzelteile und einen entsprechend hohen Fertigungsaufwand. Außerdem bedarf es jeweils einer Einführöffnung in den Behälter für das Meßmediums, was wiederum konstruktiven Aufwand auch für die Behältergestaltung nach sich zieht.

Aus Patent Abstracts of Japan Bd. 009, Nr. 174 (P-374), 19. Juli 1985 (1985-07-19)-& JP 60 049224 A, aus der DE 41 16 355 A und aus der GB-A-2 022 844 sind Sensoren der eingangs beschriebenen Art bekannt.

Weiterhin ist aus der US-A-5 111 691 ist ein Auswerteverfahren für einen Sensor der eingangs genannten Art bekannt.

Aufgabe der vorliegenden Erfindung ist es, ein einfaches Verfahren zur Auswertung der Sensorsignale eines Sensors der eingangs genannten Art zur kombinierten Temperatur- und Füllstandserfassung anzugeben, wodurch eine präzise Information über Quantität und Temperatur des Meßmediums gegeben wird und der Sensor durch eine Minimierung der Zahl der Einzelteile kostengünstig herstellbar ist und bei dem eine optimale Positionierung im Meßmedium die Meßgenauigkeit erhöht.

Diese Aufgabe wird erfindungsgemäß dadurch gelöst, daß in einer Auswerteelektronik eine Auswertung der Sensorsignale erfolgt, wobei in einem ersten Schritt das Vorhandensein des Meßmediums oder dessen Füllstand abgefragt wird, wobei bei Nichtvorhandensein von Meßmedium eine Auswerteschaltung den Ausgang auf einen um Größenordnungen geringeren Widerstandswert als dem möglichen Widerstandswert des temperaturempfindlichen Sensorelements schaltet und über das Signal des temperaturempfindlichen Sensorelements bestätigt wird, daß kein Meßmedium da ist und wobei bei Erkennen des Vorhandenseins von Meßmedium durch das Sensorelement zur Füllstandserfassung ein Signal des temperaturempfindlichen Sensorelements von der Auswerteelektronik unbeeinflußt am Ausgang anliegt.

Zur Durchführung dieses Verfahrens können bei dem Sensor beide Sensorelemente in einem gemeinsamen Gehäuse angeordnet sein, wobei das temperaturempfindliche Sensorelement und das Sensorelement zur Füllstandserfassung mit ihren jeweiligen Anschlußkontakten jeweils als ein vorgefertigtes Modul in dem Gehäuse durch Kraft-, Form- und/oder Stoffschluß fixiert sind.

Das Vereinigen beider Sensorelemente in einem einzigen Gehäuse hat den Vorteil, daß eine vereinfachte, platzsparende Montage mit wenigen Einzelteilen möglich ist.

Die modulare Bauweise erlaubt einen hohen Automatisierungsgrad, bei dem nicht mehrere einzelne Bauteile, wie Anschlußkontakte und Sensorelemente, nacheinander in das Gehäuse eingeführt und positioniert werden müssen, was üblicherweise Führungselemente innerhalb des Gehäuses notwendig macht. Weiterhin können an dem gemeinsamen Kontaktsockel an dem den Sensorelementen entgegengesetzten Ende des Gehäuses durch einen einfach gestalteten Stecker beide Sensorsignale abgegriffen werden. Beide Sensorelemente sind in dem gemeinsamen Gehäuse in unmittelbarer Nähe nebeneinander angeordnet, so daß beide den gleichen Beeinflussungen ausgesetzt sind, das heißt Fehlmessungen aufgrund unterschiedlichen Niveaus des Meßmediums im Behälter sind ausgeschlossen. Das Sensorelement zur Füllstandserfassung taucht mit seiner Spitze (Meßelektrode) direkt in das Meßmedium ein, wobei das Gehäuseinnere durch einen Dichtring vor dem Eindringen des Meßmediums geschützt ist. Das Sensorelement zur Temperaturmessung hingegen ist üblicherweise durch eine Gehäuseschutzkappe vom Meßmedium getrennt. Im Sinne einer kurzen Ansprechzeit des Temperatursensors ist auf einen guten Wärmeübergang zu achten.

Vorteilhafterweise ist die kraft-, form- und/oder stoffschlüssige Fixierung der beiden modulartig vorgefertigten Sensorelemente im Gehäuse durch Einschrauben, Einklemmen, Verkleben, Verschweißen und/oder durch Warmverformen, wie beispielsweise Warmeindrücken oder Warmverstemmen ausgeführt. Im Einzelfall kann zusätzlich eine Dichtung zum Kontaktsockel hin erforderlich sein.

Bei der Auswahl des Sensorelementes zur Temperaturerfassung hat es sich als zweckmäßig herausgestellt dafür einen temperaturabhängigen Widerstand mit negativem (NTC) oder positivem Temperaturkoeffizienten (PTC) zu verwenden. Als sogenannter PTC kommt beispielsweise ein Widerstand aus Platin oder Nickel in Frage. Derartige Meßwiderstände bieten eine hohe Meßgenauigkeit und gute Langzeitstabilität.

Zur Verbesserung des Wärmeübergangs vom Meßmedium über die Gehäusekappe auf das Sensorelement zur Temperaturerfassung kann erforderlichenfalls eine Wärmeleitpaste in die Gehäusekappe eingefüllt werden.

Das Gehäuse selbst ist in der Regel aus einem gegen über dem Meßmedium chemisch und physikalisch beständigen Kunststoff. Das Gehäuse kann aber auch zum Teil aus Metall bestehen. Von Bedeutung sind in diesem Zusammenhang die von der Materialauswahl mit abhängigen potentiellen Füge- und Fertigungsverfahren, sowie die Möglichkeit zur Halterung des Sensors am oder im Behälter des Meßmediums. Diese Halterung kann durch eine Klip- und/oder Schraubanbindung oder andere kraft- oder/und formschlüssige Befestigungsmittel erfolgen. Zur sicheren steckerseitigen Abdichtung und/oder zur Abdichtung des Sensors gegenüber der Umgebung des Behälters mit dem Meßmedium können Dichtringe erforderlich sein.

Eine weitere vorteilhafte Ausgestaltung besteht darin, daß das Sensorelement zur Füllstandserfassung zwei Meßelektroden aufweist, wobei eine davon als Gegenelektrode fungiert. Insbesondere im Kraftfahrzeug werden durch diese Maßnahme Störeinflüsse ausgekoppelt, die über den Massekontakt, der beispielsweise am Motorblock oder am Metallbehälter für das Meßmedium abgegriffen wird, auf das Sensorsignal Einfluß haben könnten.

Um ein Auslösen von Elektrolyse im Meßmedium zu vermeiden, hat es sich bewährt das Sensorelement zur Füllstandserfassung mit einer Wechselspannung zu beaufschlagen, die typischerweise ±2 Volt beträgt.

Die vorstehende Maßnahme kann noch dadurch unterstützt werden, daß ein Kondensator im Meßpfad der Meßelektrode mögliche Gleichspannungsanteile auskoppelt, um bei einem eventuellen Schadensfall (durch Leitungsschluß) Elektrokorrosion zu vermeiden. Der Einsatz dieses Kondensators ist zweckmäßig, wenn der erfindungsgemäße Sensor als sogenannter passiver Sensor mit externer Auswerteelektronik ausgestaltet ist.

Für die Meßelektrode bzw. für das Sensorelement zur Füllstandserfassung hat es sich als vorteilhaft erwiesen, den Teil, der in das Meßmedium taucht, an der Oberfläche mit einer Goldschicht zu versehen. Dies ist ein weiterer Schutz gegen Korrosionserscheinungen, die im Zusammenwirken mit dem Meßmedium, der Bestromung und dem Material der Meßelektrode auftreten können. Wird eine derartige, wenige Mikrometer dünne Goldschicht an der kritischen Spitze der Meßelektrode auftragen, so kann das restliche Grundmaterial der Meßelektrode durchaus aus einem kostengünstigen, unedlem Metall bestehen. Hierdurch entsteht ein zusätzlicher Einspareffekt. Grundsätzlich ist aber auch eine Meßelektrode aus Edelstahl einsatztauglich.

Im Sinne weitere Rationalisierung ist es von Vorteil die Auswerteelektronik mit in den Sensor bzw. sein Gehäuse zu integrieren. Zu diesem Zweck hat der Sensor im Bereich des steckerseitigen Kontaktsockels eine Aufnahme für eine Auswerteelektronik. Die Aufnahme ist für die Fixierung einer Leiterplatte geeignet, auf die passive Bauelemente montiert sind. Es ist jedoch auch eine Ausgestaltung der Aufnahme derart möglich, daß sie selbst als Leiterplatte fungieren kann. Bei einer im Sensor integrierten Auswerteelektronik wird außerdem einer der beiden Anschlußkontakte des temperaturempfindlichen Sensorelements auch für den Signalabgriff des Sensorelementes zur Füllstandserfassung benutzt, so daß sich die Anzahl der erforderlichen Einzelteile (hier der Anschlußkontakte) weiter verringert. Außerdem ist es von Vorteil gegebenenfalls eine Signalumwandlung in digitale Signale nah am Sensor vorzunehmen, da digitale Ausgangssignale bei ihrer weiteren Verarbeitung weniger störanfällig sind.

Die folgenden Ausführungsbeispiele erläutern die Erfindung mit Hilfe von Zeichnungen. Dabei zeigt:
- Figur 1: einen Längsschnitt durch einen sogenannten "passiven" Sensor zur kombinierten Temperatur- und Füllstandserfassung;
- Figur 2: einen Längsschnitt durch einen sogenannten "aktiven" Sensor zur kombinierten Temperatur- und Füllstandserfassung mit integrierter Auswerteelektronik.

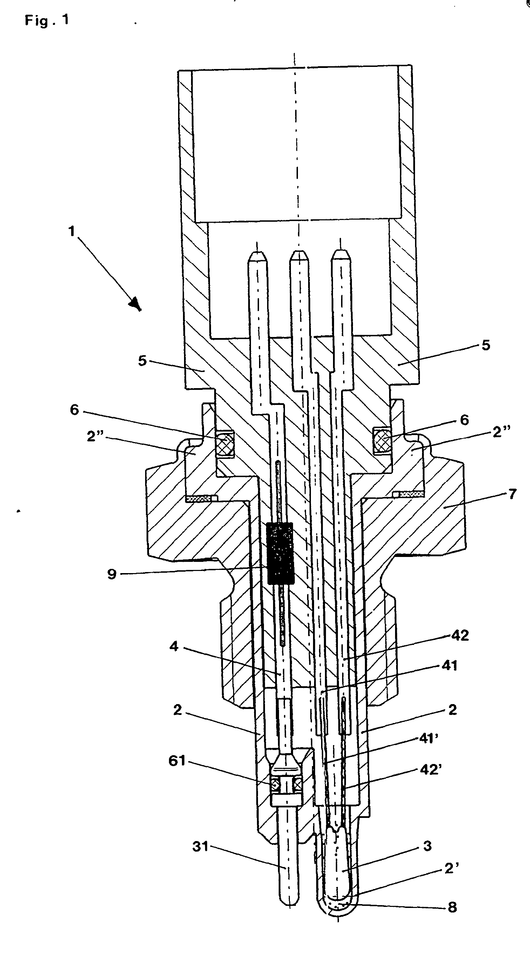

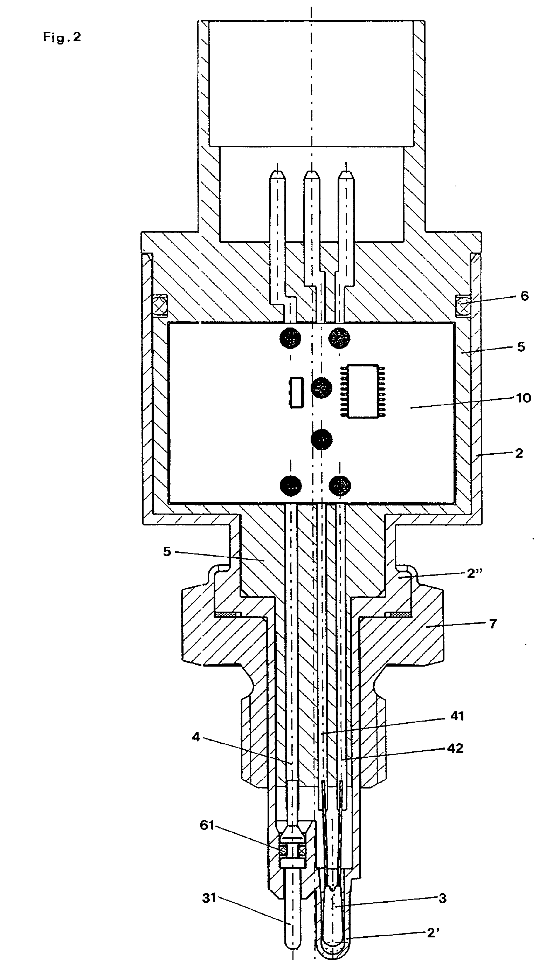

Der Sensor **1** wird entsprechend den Figuren **1** und **2** im wesentlichen durch ein längliches, in seiner Grundform hülsenförmiges Gehäuse **2** mit den beiden darin parallel und koaxial angeordneten Sensorelementen **3**, **31**, dem temperaturempfindlichen Sensorelement **3** und dem Sensorelement zur Füllstandserfassung **31** (bzw. dessen Meßelektrode **31**), gebildet. Die beiden Sensorelemente **3**, **31** sind jeweils als vorgefertigtes Bauteil in das Gehäuse **2** eingesetzt. An einem Ende des Bauteils ist das jeweilige Sensorelement **3, 31** und am entgegengesetzten Ende sind die Anschlußkontakte **4**, **41**, **42** in einem gemeinsamen Kontaktsockel **5** angeordnet. Das Gehäuse **2** und der gemeinsame Kontaktsockel **5** für die beiden Sensorelemente **3**, **31** bestehen aus einem elektrisch isolierenden Kunststoff. Das Gehäuse **2** mit den eingesetzten Sensorelementen **3**, **31** und der Kontaktsockel **5** sind miteinander durch Einklemmen verbunden, wobei ein Dichtring **6** zwischen Gehäuse **2** und Kontaktsockel **5** einen zusätzlichen Reibschluß verursacht. Zur Anbindung an den Behälter mit Meßmedium bzw. an den Prüfraum ist ein Verbindungsteil in Form eines Metallflansches **7** außen am Sensor **1** angebracht, der beispielweise mittels eines Schraubgewindes mit der Behälterwandung verschraubt wird. Der Sensor **1** erhält damit eine fixe Position im Meßmedium. Der Metallflansch **7** greift im vorliegenden Fall um einen Vorsprung **2''** am Gehäuse **2** herum, so daß das Gehäuse **2** mit dem Kontaktsockel **5** vom Metallflansch **7** zusätzlich zusammengehalten wird. An Stelle des Metallflansches **7** ist es auch möglich das Gehäuse **2** selbst mit einem Schraubgewinde oder mit Klipsen zu versehen, die zur Befestigung bzw. Anbindung des Sensors **1** im oder am Prüfraum dienen.
Das temperaturempfindliche Sensorelemente **3** innerhalb der Meßspitze **2'** des Gehäuses 2 ist in Wärmeleitpaste **8** eingetaucht, wohingegen die Meßelektrode als wesentliches Teil des Sensorelements zur Füllstandserfassung **31** durch eine mittels Dichtring **61** abgedichtete Öffnung in der Meßspitze **2'** des Gehäuses **2** hindurch direkt in das Meßmedium, hier die Kühlflüssigkeit im Motorblock eines Kraftfahrzeugs, eintaucht. Als temperaturempfindliches Sensorelement **3** wird ein Meßwiderstand mit negativen Temperaturkoeffizienten (NTC) verwendet. Er ist beispielsweise in Tablettenform ausgebildet und hat zwei Anschlußdrähte **41'**, **42'**, die an zum Kontaktsockel 5 führende Anschlußkontakte **41, 42** angelötet oder angeschweißt sind.
Die Meßelektrode **31** als wesentliches Teil des Sensorelements zur Füllstandserfassung hat an ihrer Spitze, die in das Meßmedium hineinragt, eine dünne Goldschicht, wobei das Grundmaterial selbst ein kostengünstiges unedles Metall ist. Der Anschlußkontakt **4** der Meßelektrode **31** weist gemäß der Ausführungsform in Figur 1 einen Kondensator **9** auf, der etwaige Gleichspannungsanteile auskoppelt und somit eine zusätzliche Schutzfunktion gegenüber Elektrokorrosionserscheinungen hat.

Gemäß der Ausführungsform nach Figur 2 weist der Kontaktsockel **5** eine Auswerteelektronik **10** auf. Diese Auswerteelektronik **10** sorgt für eine Signalumwandlung direkt am Sensor **1**, wobei ein Kondensator **9** wie in Figur 1 nicht erforderlich ist, da eventuelle Störgrößen direkt über die Auswerteelektronik **10** eliminiert werden.

## Patentansprüche

1. Verfahren zur Auswertung der Sensorsignale eines Sensors zur kombinierten Temperatur- und Füllstandserfassung von elektrisch leitfähigen Medien, insbesondere von Kühlflüssigkeit im Kraftfahrzeug, mit einem in einem Gehäuse jeweils an einem Ende angeordneten, in das Meßmedium hineinragenden temperaturempfindlichen Sensorelement und mindestens einer Meßelektrode als Sensorelement zur Füllstandserfassung, die durch eine gegenüber dem Meßmedium abgedichtete Öffnung des Gehäuses hindurch direkt in das Meßmedium eintaucht und an der im Zusammenwirken mit einer Gegenelektrode der spezifische elektrische Widerstand des Meßmediums erfaßt wird, wobei jedes Sensorelement elektrische Anschlußkontakte aufweist, die zu einem Kontaktsockel geführt sind, wo die Sensorsignale abgegriffen werden, beide Sensorelemente (3; 31) in einem gemeinsamen Gehäuse (2) mit gemeinsamen Kontaktsockel (5) angeordnet sind, wobei das temperaturempfindliche Sensorelement (3) und das Sensorelement zur Füllstandserfassung (31) mit ihren jeweiligen Anschlußkontakten (4; 41; 42) jeweils als ein vorgefertigtes Modul in dem Gehäuse (2) durch Kraft-, Form- und/oder Stoffschluß fixiert sind, **dadurch gekennzeichnet, daß** in einer Auswerteelektronik eine Auswertung der Sensorsignale erfolgt, wobei in einem ersten Schritt das Vorhandensein des Meßmediums oder dessen Füllstand abgefragt wird, wobei bei Nichtvorhandensein von Meßmedium eine Auswerteschaltung den Ausgang auf einen um Größenordnungen geringeren Widerstandswert als dem möglichen Widerstandswert des temperaturempfindlichen Sensorelements schaltet und über das Signal des temperaturempfindlichen Sensorelements bestätigt wird, daß kein Meßmedium da ist und wobei bei Erkennen des Vorhandenseins von Meßmedium durch das Sensorelement zur Füllstandserfassung ein Signal des temperaturempfindlichen Sensorelements von der Auswerteelektronik unbeeinflußt am Ausgang anliegt.

## Claims

1. Method for evaluating the sensor signals of a sensor for the combined sensing of the temperature and filling level of electrically conductive media, in particular of the coolant in a motor vehicle, having a temperature-sensitive sensor element which is arranged in a housing, in each case at one end, and projects into the medium to be measured, and at least one measuring electrode as a sensor element for sensing the filling level, which measuring electrode dips directly into the medium to be measured through an opening in the housing which is sealed with respect to the medium to be measured, and at which measuring electrode the specific electrical resistance of the medium to be measured is sensed through interaction with a corresponding electrode, wherein each sensor element has electrical connecting contacts which lead to a contact base where the sensor signals are tapped, and both sensor elements (3; 31) are arranged in a common housing (2) with a common contact base (5), wherein the temperature-sensitive sensor element (3) and the sensor element (31) for sensing the filling level are each secured by their respective connecting contacts (4; 41; 42) to a prefabricated module in the housing (2) by means of a positive, non-positive and/or materially joined connection, **characterized in that** the sensor signals are evaluated in an electronic evaluation device, wherein in a first step the presence of the medium to be measured or its filling level is interrogated, wherein if the medium to be measured is not present an evaluation circuit switches the output to a resistance value which is lower by orders of magnitude than the possible resistance value of the temperature-sensitive sensor element, and by means of the signal of the temperature-sensitive sensor element it is confirmed that a medium to be measured is not present, and wherein if the presence of medium to be measured is detected by the sensor element for sensing the filing level a signal of the temperature-sensitive sensor element is present at the output without being influenced by the electronic evaluation device.

## Revendications

1. Procédé d'exploitation des signaux d'un capteur pour relever de façon combinée la température et le niveau de milieux conducteurs de l'électricité, notamment de liquide de refroidissement dans le véhicule automobile, comprenant, disposé dans un boîtier, respectivement un élément de capteur à une extrémité pénétrant dans le fluide à mesurer et sensible à la température et au moins une électrode de mesure en tant qu'élément de capteur pour relever le niveau, qui plonge directement dans le fluide à mesurer par une ouverture du boîtier rendue étanche vis-à-vis du fluide à mesurer et sur laquelle est relevée, en coopération avec une contre-électrode, la résistance spécifique du fluide à mesurer, chaque élément de capteur ayant des contacts électriques de connexion, qui sont guidés vers une embase de contact où les signaux de capteurs peuvent être prélevés, les deux éléments (3, 31) de capteur étant disposés dans un boîtier (2) commun ayant une embase (5) de contact commune, l'élément (3) de capteur sensible à la température et l'élément de capteur pour relever (31) le niveau étant immobilisés par coopération de forces, de forme et/ou de matière dans le boîtier (2), respectivement par leurs contacts (4 ; 41 ; 42) de connexion respectivement sous la forme d'un module préfabriqué, **caractérisé en ce qu'**il s'effectue, dans une électronique d'exploitation, une exploitation des signaux de capteur, dans laquelle, dans une premier stade, on s'interroge sur la présence du fluide à mesurer ou sur son niveau et, s'il n'y a pas présence de fluide à mesurer, un circuit d'exploitation branche la sortie sur une valeur de résistance plus petite d'ordres de grandeur que la valeur de résistance possible de l'élément de capteur sensible à la température et il est confirmé par le signal de l'élément de capteur sensible à la température qu'il n'y a pas de fluide à mesurer, tandis que, s'il est détecté la présence de fluide à mesurer par l'élément de capteur, pour le relevé de niveau, un signal de l'élément de capteur sensible à la température est appliqué par l'électronique d'exploitation à la sortie sans modification.
